## Europäisches Patentamt

## European Patent Office

## Office européen des brevets

(19)

(11) Numéro de publication: **0 160 579**
**B1**

---

(12) ## FASCICULE DE BREVET EUROPÉEN

(45) Date de publication du fascicule du brevet:
08.06.88

(51) Int. Cl.⁴: **G 01 P 11/00**, G 01 P 5/00

(21) Numéro de dépôt: **85400315.9**

(22) Date de dépôt: **21.02.85**

---

(54) Conversion d'un signal fluctuant correspondant à un temps de transit entre deux repères en une tension proportionnelle à la vitesse moyenne.

---

(30) Priorité: **24.02.84 FR 8402818**

(43) Date de publication de la demande:
**06.11.85 Bulletin 85/45**

(45) Mention de la délivrance du brevet:
**08.06.88 Bulletin 88/23**

(84) Etats contractants désignés:
**DE GB IT SE**

(56) Documents cité:
**EP-A-0 027 392**
**EP-A-0 049 195**
**DE-A-2 908 307**
**DE-A-3 220 170**
**GB-A-1 544 199**
**US-A-3 506 809**

(73) Titulaire: **REGIE NATIONALE DES USINES RENAULT, Boîte postale 103 8-10 avenue Emile Zola, F-92109 Boulogne- Billancourt (FR)**

(72) Inventeur: **Hannoyer, Giles, Les clos du Bel Air Rue Taillevent, F-78100 Saint Germain en Laye (FR)**
Inventeur: **Fauconnet, Jean- François, 84, rue Voltaire, F-92500 Rueil Malmaison (FR)**

(74) Mandataire: **Colas, Jean- Pierre, 8 et 10 Avenue Emile Zola, F-92109 Boulogne- Billancourt (FR)**

---

## Description

La présente invention a pour objet un dispositif de conversion d'un signal électrique fluctuant qui mesure le temps de transit d'un marqueur entre deux repères d'un capteur parcouru par un fluide, en une tension proportionnelle à la vitesse moyenne de ce fluide entre lesdits repères.

Ce dispositif s'applique au traitement des signaux de divers capteurs et notamment de ceux obtenus dans les capteurs ioniques de vitesse de fluides, dans lesquels le passage d'un nuage d'ions est détecté par des électrodes successives, dont un exemple est décrit dans la demande de brevet européen EP-A- 0 049 195. Dans certaines applications, les fluctuations instantanées de débit doivent être moyennées pour faciliter l'exploitation du signal.

Les solutions de l'art antérieur consistent par exemple à traiter successivement le signal dans différents circuits tels que convertisseur temps tension, suivi d'un circuit de maintien, puis d'un diviseur analogique et d'un circuit de moyennage.

Le dispositif objet de la présente demande, apporte une simplification au traitement électronique du signal ainsi qu'une plus grande stabilité par suite de la présence d'une boucle de retour qui compense les dérives. Il assure en outre, s'il est nécessaire, un cadencement variable des évènements à l'entrée en fonction de la valeur moyenne élaborée de la vitesse dudit fluide.

L'invention sera maintenant décrite en se référant aux figures annexées.

La figure 1 est un schéma synoptique de l'ensemble du dispositif appliqué au traitement du signal d'un capteur ionique de débit gazeux à temps de transit.

La figure 2 est le schéma diagramme des tensions variables en différents points du circuit de conversion.

La figure 3 est la représentation graphique d'une loi de cadencement des évènements d'entrée appliquée au capteur ionique de la figure 1.

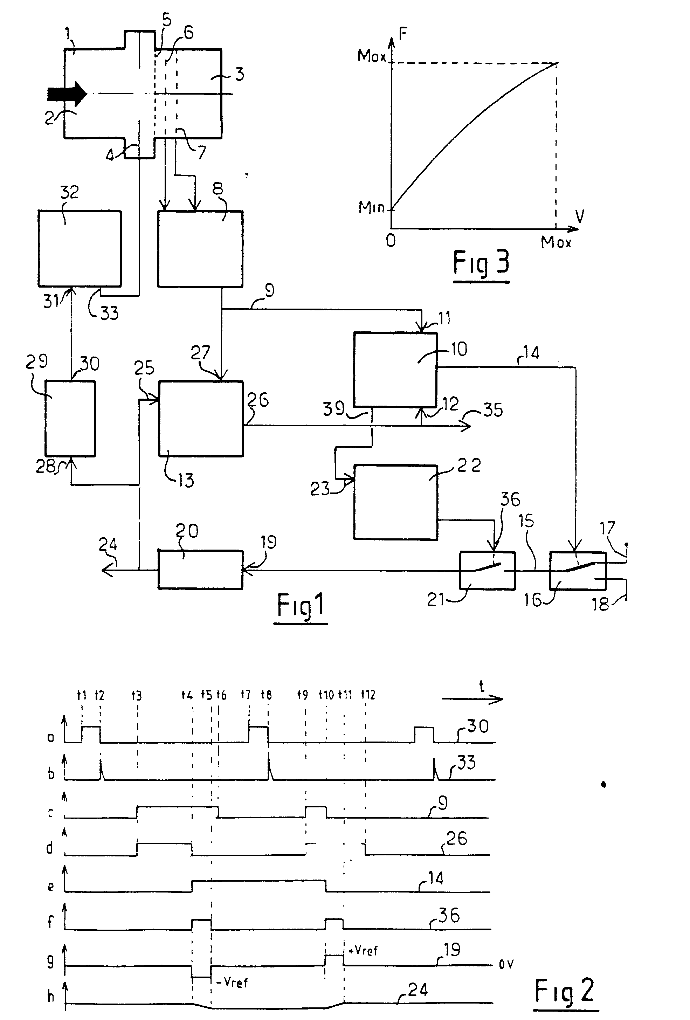

Sur la figure 1 a été représenté un capteur ionique 1 de débit de fluide circulant entre l'entrée 2 et la sortie 3.

Des impulsions de haute tension sont appliquées à des aiguilles 4 créant des ions qui passent à travers une grille écran 5 et deux électrodes de mesure 6 et 7 qui recueillent des tensions décalées dans le temps traitées par un circuit électronique 8 de détection de crête. A la sortie 9 de ce circuit 8 est obtenue une impulsion de tension dont la durée est égale au temps de transit des ions entre les électrodes de mesure 6 et 7.

Le signal est appliqué à un circuit 10 comparateur de temps entre les signaux arrivant à son entrée 11 correspondant à la sortie 9 et à une autre entrée 12 provenant d'un circuit 13 simulant le fonctionnement du capteur 1 et dont le rôle sera expliqué plus loin.

L'impulsion arrivant en 12 issue du simulateur 13 démarre en même temps que celle arrivant à l'entrée 11 mais avec en général, une durée différente car elle est représentative de la moyenne des durées des impulsions issues du détecteur 8 de crête. Si le signal de l'entrée 11 est plus court, la sortie 14 du circuit 10 connecte la sortie 15 d'un inverseur électronique 16 à une tension positive de référence 17. Dans le cas contraire, la sortie 15 est connectée à une tension négative 18.

La sortie 15 est connectée à l'entrée 19 d'un intégrateur 20 par l'intermédiaire d'un interrupteur analogique 21 commandé en son entrée 36 par un circuit monostable 22 recevant sur son entrée de synchronisation 23 un signal émis par le comparateur de temps 10 lorsque la comparaison est achevée.

La sortie 24 de l'intégrateur 20 qui représente le signal de sortie du dispositif est appliqué à l'entrée 25 du simulateur 13 du capteur 1. Ce simulateur 13 fournit à sa sortie 26 reliée à une borne de sortie 35, une impulsion de temps proportionnelle à l'inverse de la tension présente à son entrée 25, lorsque parvient à son entrée auxiliaire 27 le signal issu de la sortie 9 du détecteur de crête 8.

Le signal de la sortie 24 est également appliqué à l'entrée 28 d'un circuit de cadencement 29 qui délivre sur sa sortie 30 des impulsions appliquées à l'entrée 31 du générateur de haute tension 32 dont la sortie 33 est connectée aux aiguilles 4.

Sur la figure 2 a été représentée l'évolution en fonction du temps des tensions électriques à différentes entrées ou sorties de la figure 1 avec leurs repères correspondants.

La courbe 2a représente la sortie 30 du cadenceur 29. Aux instants t1 et t7 une impulsion de charge est envoyée au générateur 32, la fin de l'impulsion en t2 ( ou t8) fait apparaître une haute tension correspondant à la courbe 2b sur la sortie 33 qui est appliquée aux aiguilles 4 et provoque la création d'un nuage d'ions qui se déplace avec le fluide.

La courbe 2c montre entre les instants t3 et t6 d'une part, et t9 et t10 d'autre part, le signal électrique à la sortie 9 de la détection de crête 8 qui correspond à deux temps de transit successifs représentés très différents.

La courbe 2d représente le signal à la sortie 26 du simulateur 13 de capteur qui apparaît entre les instants t3 et t4 d'une part, et t9 et t12 d'autre part. La borne de sortie 35 reliée à la sortie 26 permet de disposer des impulsions délivrées par le simulateur 13. La courbe 2e représente le signal à la sortie 14 du comparateur de temps 10. A l'instant t4 le signal de sortie du simulateur 13 basculant avant celui de la détection de crête 8, la sortie 14 prend un état haut et le conserve jusqu'à la prochaine comparaison.

Dans le cas représenté à l'instant t10 le signal de la sortie 9 revenant à l'état bas avant celui du simulateur, le signal de sortie du comparateur 10 prend l'état bas et le conserve jusqu'à la prochaine comparaison.

La courbe 2f représente le signal sur la sortie 36 du monostable 22 qui est déclenché lors de chaque comparaison pour un temps déterminé.

La courbe 2g correspond au signal présent à l'entree 19 de l'intégrateur 20, un incrément de décharge est appliqué à celui-ci entre les instants t4 et t5 à la suite suite de la comparaison des durées d'impulsion des sorties 9 et 26 (courbes 2c, 2d).

Cette comparaison a montré que le simulateur ayant délivré un signal de durée inférieure à celle du signal fourni par le détecteur 8 de crête et étant de ce fait plus rapide que le capteur, il y avait lieu de décrémenter la tension de sortie 24 de l'intégrateur appliquée en 25 au simulateur de capteur 13 en vue d'égaliser les durées des impulsions du capteur et du simulateur. La courbe 2h montre l'effet de ce décrément entre les instants t4 et t5.

Le phénomène inverse a lieu entre les instants t10 et t11 pour assurer l'asservissement de la durée de l'impulsion du simulateur à celle du capteur. La borne de sortie 35 délivre en conséquence, une impulsion dont la durée représente la durée moyenne des temps de transit du capteur.

Le démarrage initial du processus est assuré en réglant le cadenceur 29 de telle manière qu'il produise des signaux à faible fréquence de répétition même pour une tension utile nulle à son entrée 28.

La figure 3 montre une variation possible de ce cadencement pour l'application décrite à un capteur ionique de vitesse de fluide. Le dispositif peut s'appliquer à tous les types de capteurs à temps de transit, le cadencement pouvant être fixe ou variable sans sortir du cadre de l'invention.

La réalisation du dispositif peut être obtenue avec des circuits intégrés usuels du commerce. A titre d'exemple, il est possible de réaliser le comparateur de temps 10 avec des portes logiques "NON ET" type 4011 et une bascule D type 4042, l'inverseur analogique 16 et l'interrupteur analogique 21 avec des portes analogiques type 4066, l'intégrateur 20 avec un amplificateur opérationnel type 2904, le simulateur 13 avec un amplificateur opérationnel type 2904 monté en intégrateur commandé par des portes analoqiques type 4066 et connecté à un comparateur de tension de type 2903, le monostable 22 à partir du circuit type 4528, le cadenceur 29 à partir d'un générateur d'impulsions de type 555.

Une réalisation plus industrielle sera obtenue avec un circuit intégré spécifique regroupant les fonctions précédentes.

**Revendications**

1. Dispositif de conversion d'un signal fluctuant correspondant à un temps de transit d'un marqueur entre deux repères d'un capteur (1) parcouru par un fluide, ce marqueur étant créé à partir d'impulsions issues d'un générateur haute tension (32) connecté à l'entrée du capteur (1), en une tension proportionnelle à la vitesse moyenne dudit fluide, caractérisé en ce qu'il comprend un comparateur de temps (10) recevant sur une première entrée (11) et après traitement dans un circuit de mise en forme (8), un premier signal issu de capteur (1) et de durée égale audit temps de transit ; sur une secon de entrée (12), un second signal provenant d'une boucle de retour comportart un simulateur électrique (13) du capteur recevant le signal de sortie (24) élaboré dans un intégrateur (20) incrémenté ou décrémenté d'une valeur déterminée dépendant de la durée de signal d'un circuit monostable (22) commandant un interrupteur analogique (21) et de l'état logique de la sortie (14) du comparateur de temps (10) qui commande par un inverseur analogique (16) le choix d'une incrémentation ou d'une décrémentation par connexion de l'entrée (19) de l'intégrateur (20) à un potentiel positif (17) ou négatif (18), le simulateur (13) de capteur recevant également pour sa synchronisation le signal de sortie (9) du circuit de mise en forme (8) tandis que l'entrée (23) de synchronisation du circuit monostable (22) est connectée à la sortie (39) du comparateur (10) délivrant un signal à la fin de la comparaison desdits premier et second signaux.

2. Dispositif selon la revendication 1, caractérisé en ce qu'il est prévu une connexion (35) ver l'extérieur, reliée à la sortie (26) du simulateur (13), le signal délivré sur cette connexion étant représentatif de la durée moyenne des temps de transit.

3. Dispositif revendictions 1 ou 2, caractérisé en ce que le signal (24) de sortie de l'intégrateur (20) est également appliqué à l'entrée (28) d'un circuit de cadencement (29) qui délivre des impulsions à l'entrée du générateur d'impulsions haute tension (32) et assure un cadencement variable des impulsions à l'entrée du circuit de mise en forme (8) fonction en de la valeur moyenne de la vitesse dudit fluide.

**Patentansprüche**

1. Vorrichtung zur Umwandlung eines entsprechend der Übergangszeit einer Markierung zwischen zwei Referenzwerten schwankenden Signals eines von einem Fluid durchströmten Fühlers (1) in eine der Durchschnittsgeschwindigkeit des Fluids proportionale Spannung, wobei die Markierung ausgehend von Impulsen gebildet wird, die von einem Hochspannungsgenerator (32) stammen, der mit dem Eingang des Fühlers (1) verbunden ist, dadurch gekennzeichnet, daß sie einen Zeitvergleicher (10) aufweist, dessen erstem Eingang (11) nach der Verarbeitung in einer Formgebungsschaltung (8) ein erstes vom Fühler (1) stammendes Signal zugeführt wird, dessen Dauer gleich der Übergangszeit ist; dem zweiten Eingang (12) wird ein zweites Signal zugeführt, das von einer Koppelschaltung stammt, die einen elektrischen Simulator (13) des Fühlers aufweist, dem ein Ausgangssignal (24) zugeführt wird, das in einem Integrator (20) vergrößert oder verkleinert worden ist, um einen vorgegebenen Wert der von der Dauer des Signals einer monostabilen Schaltung (22) abhängt, die einen Analogschalter (21) steuert, sowie vom logischen Zustand des Ausgangs (14) des Zeitvergleichers (10), der über einen Analogumwandler (16) die Vergrößerung oder die Verkleinerung durch Verbindung des Eingangs (19) des Integrators (20) mit einem positiven Potential (17) oder einem negativen Potential (18) auswählt, wobei der Simulator (13) des Fühlers für seine Synchronisierung ebenfalls das Ausgangssignal (9) der Formgebungsschaltung (8) erhält, während der Synchronisationseingang (23) der monostabilen Schaltung (22) mit dem Ausgang (39) des Vergleichers (10) verbunden ist und ein Signal am Ende des Vergleiches zwischen den ersten und zweiten Signalen abgibt.

2. Vorrichtung nach Anspruch 1, dadurch gekennzeichnet, daß eine Verbindung (35) nach außen vorgesehen ist, die mit dem Ausgang (26) des Simulators (13) verbunden ist, wobei das auf dieser Verbindung anstehende Signal ein Maß für die mittlere Dauer der Übergangszeit ist.

3. Vorrichtung nach Ansprüchen 1 oder 2, dadurch gekennzeichnet, daß das Ausgangssignal (24) des Integrators (20) ebenfalls dem Eingang (28) einer Zählschaltung (29) zugeführt wird, welche dem Eingang des Hochspannungs-Impulsgenerators (32) Impulse liefert und eine variable Zählung der Impulse am Eingang der Formgebungsschaltung (8) als Funktion des verarbeiteten Mittelwertes der Geschwindigkeit des Fluids gewährleistet.

**Patentansprüche**

1. Apparatus for converting a fluctuating signal corresponding to a transit time of a marker between two reference points of a sensor (1) through which a fluid passes, said marker being created from pulses produced by a high voltage generator (32) connected to the input of the sensor (1), into a voltage which is proportional to the average speed of said fluid, characterised in that it comprises a time comparator (10) receiving on a first input (11) and after processing in a shaping circuit (8) a first signal which is produced by the sensor (1) and which is of a duration equal to said transit time; on a second input (12) a second signal from a feedback loop comprising an electrical simulator (13) of the sensor, receiving the output signal (24) produced in an integrator (20) which is incremented or decremented by a given value dependent on the signal duration of a monostable circuit (22) controlling an analog contact breaker switch (21) and the logic state of the output (14) of the time comparator (10) which by way of an analog inverter (16) controls the selection of incrementation or decrementation by connection of the input (19) of the integrator (20) to a positive potential (17) or a negative potential (18), the sensor simulator (13) also receiving for synchronization thereof the output signal (9) of the shaping circuit (8) while the synchronization input (23) of the monostable circuit (22) is connected to the output (39) of the comparator (10) which supplies a signal at the end of the comparison of said first and second signals.

2. Apparatus according to claim 1 characterised in that there is provided a connection (35) to the exeterior, which is connected to the output (26) of the simulator (13), the signal supplied on said connection being representative of the average duration of the transit times.

3. Apparatus according to claim 1 or claim 2 characterised in that the output signal (24) of the integrator (20) is also applied to the input (28) of a clock circuit (29) which supplies pulses to the input of the high voltage pulse generator (32) and provides for variable clock timing of the pulses at the input of the shaping circuit (8) in dependence on the mean value produced in respect of the speed of said fluid.

Fig 3

Fig1

Fig 2